# EUROPÄISCHE PATENTSCHRIFT

(11) **EP 1 737 639 B1**
(45) Veröffentlichungstag und Bekanntmachung des Hinweises auf die Patenterteilung: **09.11.2011**
(21) Anmeldenummer: 05738773.0
(22) Anmeldetag: 01.04.2005
(51) Int. Cl.: B29C 45/26, B29C 33/30, B29C 33/44

(54) **VORRICHTUNG ZUM HERSTELLEN VON FORMTEILEN UND BAUEINHEIT FÜR EINE SOLCHE VORRICHTUNG**
DEVISED FOR PRODUCING MOULDED PARTS AND STRUCTURAL UNIT FOR ONE SUCH DEVICE
DISPOSITIF POUR FABRIQUER DES ELEMENTS MOULES ET UNITE MODULAIRE POUR UN DISPOSITIF DE CE TYPE

(30) Priorität: 22.04.2004 DE 102004019633
(43) Veröffentlichungstag der Anmeldung: 03.01.2007
(73) Patentinhaber: FBZ - Formenbau Züttlingen GmbH, 74219 Möckmühl (DE)
(72) Erfinder: SCHMELCHER, Roland, 74196 Neuenstadt (DE); KLOTZBÜCHER, Armin, 74831 Gundelsheim (DE)
(74) Vertreter: Naumann, Ulrich
(86) Internationale Anmeldenummer: PCT/DE2005/000581
(87) Internationale Veröffentlichungsnummer: WO 2005/102655

(56) Entgegenhaltungen:
- EP-A- 0 700 766
- DE-A1- 10 048 894
- FR-A- 2 762 252
- FR-A- 2 809 344
- US-A- 3 871 611
- US-A- 4 828 479
- PATENT ABSTRACTS OF JAPAN Bd. 011, Nr. 310 (M-630), 9. Oktober 1987 (1987-10-09) -& JP 62 097814 A (HITACHI LTD), 7. Mai 1987 (1987-05-07)
- PATENT ABSTRACTS OF JAPAN Bd. 1998, Nr. 05, 30. April 1998 (1998-04-30) -& JP 10 024424 A (HONDA MOTOR CO LTD), 27. Januar 1998 (1998-01-27)

## Beschreibung

Die Erfindung betrifft eine Vorrichtung nach dem Oberbegriff des Patentanspruchs 1.

Derartige Vorrichtungen dienen insbesondere zur Herstellung von Bauteilen für Kraftfahrzeuge, beispielsweise von Stoßfängern, flächigen Verkleidungselementen, Armaturenbretteinheiten, Spoilern und dergleichen.

Eine Vorrichtung der gattungsbildenden Art umfasst üblicherweise ein Kernteil mit einer formgebenden Kernseite und mit einem Mantelteil mit einer formgebenden Mantelseite, die zwischen einer maschinenseitigen Aufspannfläche und einer Druck ausübenden Anordnung gegeneinander verspannbar sind und dabei zwischen sich einen Hohlraum begrenzen, der dem zu erzeugenden Formteil entspricht und in den - im Falle der Ausbildung als Spritzgießwerkzeug - wenigstens eine Hochdruckzuführung für das Spritzgussmaterial mündet. Das Kernteil und das Mantelteil werden üblicherweise auch als Patrize bzw. Matrize bezeichnet.

Das Kernteil ist an seiner Unterseite über Betätigungsstangen und/oder über Führungsorgane mit einer dem speziellen Formteil und somit dem speziellen Kernteil zugeordneten Auswerfereinrichtung verbunden, die zwischen einer Betriebsstellung und einer Auswurfstellung relativ zu dem Kernteil verfahrbar ist. Durch Verfahren der Auswerfereinrichtung in die Auswurfstellung werden gleitverschieblich gelagerte Auswerfereinsätze, die in der Betriebsstellung noch formschlüssig in die Form gebende Kernseite des Kernteils eingesetzt sind, ausgefahren und führen dadurch eine Auswurfbewegung zum Entformen eines hergestellten Formteils aus.

Das Kernteil ist an einem Kernträger montierbar, der üblicherweise plattenförmig ausgebildet ist und mehrere Bohrungen aufweist, die von den genannten Betätigungsstangen und/oder Führungsorganen durchdrungen werden, um die Auswurfbewegung der Auswerfereinrichtung relativ zu dem Kernteil zu ermöglichen. Der modulare Aufbau aus Kernteil und hiervon separatem Kernträger hat den Vorteil, dass an demselben Kernträger wahlweise verschiedene Kernteile mit unterschiedlicher Form gebender Kernseite montiert werden können, um unterschiedliche Formteile herzustellen, wobei auch das zugeordnete Mantelteil auszutauschen ist. Allerdings verursacht der Einsatz unterschiedlicher Kernteile einen unerwünscht hohen Montageaufwand, da nicht nur das an der Oberseite des Kernträgers montierte Kernteil, sondern auch die unterseitig angeordnete, mit dem jeweiligen Kernteil verbundene Auswerfereinrichtung ausgetauscht werden muss. Dies ist insbesondere hinsichtlich der Bewegungsmechanik von seitlich beweglichen Auswerferabschnitten des Kernteils, wie beispielsweise der Bewegungsmechanik von Eckschiebern, äußerst aufwendig.

Aus PATENT ABSTRACTS OF JAPAN Bd. 011, Nr. 310 (M-630), 9. Oktober 1987 -& JP 62 097814 A (HITACHI LTD), 7. Mai 1987 und PATENT ABSTRACTS OF JAPAN Bd. 1998, Nr. 05, 30. April 1998 -& JP 10 024424 A (HONDA MOTOR CO LTD), 27. Januar 1998 sind jeweils für sich gesehen gattungsbildende Vorrichtungen bekannt. Im Konkreten sind daraus Vorrichtungen zum Herstellen von Formteilen, insbesondere von Spitzguss-, Druckguss- oder Pressformteilen, bekannt. Der Kernträger ist dort als Kernträgerrahmen mit einem Durchgang ausgebildet. Das Kernteil und die Auswerfereinrichtung bilden eine Baueinheit. Diese Baueinheit ist von einer Seite aus an dem Kernträgerrahmen einsteckbar. Im eingesteckten Zustand erstreckt sich die Auswerfeinrichtung durch den Durchgang hindurch.

Aus der US-A-4 828 479 (PLEASANT ET AL), 9. Mai 1989 ist für sich gesehen bei entsprechenden Vorrichtungen die Verwendung von Adapterplatten zur Bewegung der Auswerferplatte über Schubeinrichtungen bekannt.

Die gattungsbildende Vorrichtung ist in der Praxis dann problematisch, wenn aufgrund der Dimensionierung der herzustellenden Werkstücke mit großen Kräften gearbeitet wird. So besteht insbesondere die Gefahr einer Verwindung des Rahmens.

Der vorliegenden Erfindung liegt daher die Aufgabe zugrunde, die gattungsbildende Vorrichtung derart auszugestalten und weiterzubilden, dass unter Gewährleistung eines schnellen Umrüstens für unterschiedliche Formteile bei einfachster Konstruktion der Vorrichtung eine hinreichende Abstützung des Kernteils gewährleistet ist, insbesondere zur Aufnahme hoher Press-/Andrückkräfte.

Diese Aufgabe wird durch eine Vorrichtung mit dem Merkmalen des Anspruchs 1 dadurch gelöst, dass zumindest zwei gegenüberliegende Rahmenschenkel zur unmittelbaren Anlage äußerer Bereiche des Kernteils dienen und dass das Kernteil seitliche Stützabschnitte aufweist, die im montierten Zustand der Vorrichtung an dem Kernträgerrahmen anliegen.

Bei der erfindungsgemäßen Vorrichtung ist der Kernträger rahmenförmig mit einem zentralen Durchgang ausgebildet, der ein Passieren der Auswerfereinrichtung gestattet. Dadurch können das Kernteil und die Auswerfereinrichtung, beispielsweise in Form einer Auswerferplatte, als eine vormontierte Baueinheit von einer Seite aus - insbesondere von oben - entlang einer einzigen Montagerichtung an dem Kernträgerrahmen montiert werden. Das Kernteil wird also mit der Auswerterplatte voraus an dem Kernträgerrahmen angesetzt oder eingesetzt. Der Durchgang des Kernträgerrahmens ist dabei so dimensioniert, dass die Auswerferplatte durch den Durchgang hindurch geführt werden kann. Auch für die Demontage können das Kernteil und die Auswerferplatte als eine gemeinsame Baueinheit entgegen der genannten Montagerichtung von dem Kernträgerrahmen entnommen werden.

Das für ein spezielles Formteil vorgesehene Kernteil und die diesem Kernteil zugeordnete Auswerferplatte können also miteinander verbunden bleiben, während sie an dem Kernträger montiert oder von dem Kernträger demontiert werden. Insbesondere ist es nicht - wie bei bekannten Kernträgern mit durchgehendem Boden - erforderlich, die Verbindung zwischen Kernteil und zugeordneter Auswerferplatte zu lösen, um das Kernteil von der einen Seite - insbesondere von oben - an dem Kernträger zu montieren und die Auswerferplatte von der gegenüberliegenden Seite - insbesondere von unten - an dem Kernträger zu befestigen.

Dadurch, dass das Kernteil und die Auswerferplatte als gemeinsame Baueinheit an dem Kernträgerrahmen montiert oder von diesem demontiert werden können, ist ein einfaches und schnelles Umrüsten des Werkzeugs für unterschiedliche zu erzeugende Formteile möglich. Versuche haben gezeigt, dass die Baueinheit aus Kernteil und Auswerferplatte im Zusammenbau innerhalb von ca. einer Stunde ausgebaut werden kann, ohne hierfür weiter zerlegt werden zu müssen, während für diesen Vorgang bei bekanntem Aufbau bis zu 20 Stunden und mehr erforderlich sind. Der Kernträgerrahmen kann also mit geringem Aufwand mit völlig unterschiedlichen Kernteilen bestückt werden, so dass - wenn auch das zugeordnete Mantelteil entsprechend ausgetauscht wird - mit demselben Kernträgerrahmen nahezu beliebig viele verschiedene Typen von Formteilen - beispielsweise Stoßfänger - gefertigt werden können. Der Kernträgerrahmen eignet sich somit gleichermaßen zur Aufnahme von Prototyp-Einsätzen und Serien-Kernteilen, jeweils in Verbindung mit dem zugeordneten Mantelteil.

Je nach dem, auf welcher Höhe des Kernträgerrahmens das Kernteil montiert wird, ragt die mit dem Kernteil verbundene Auswerferplatte während der Montage in den zentralen Durchgang des Kernträgerrahmens hinein oder durchdringt diesen. Jedenfalls umgibt der Durchgang die Betätigungsstangen und eventuelle Führungsorgane, die die Auswerterplatte in der Betriebsstellung mit dem Kernteil verbinden. Wichtig ist also, dass der Kernträgerrahmen einen einzigen zentralen Durchgang für im Wesentlichen sämtliche Befestigungsstangen und Führungsorgane zwischen dem Kernteil und der Auswerferplatte aufweist, so dass keine oder allenfalls wenige Verbindungen zwischen dem Kernteil und der Auswerferplatte gelöst werden müssen, um das Kernteil mit der Auswerferplatte an dem Kernträgerrahmen zu montieren oder von dem Kernträgerrahmen zu demontieren. Zusätzlich zu dem zentralen Durchgang kann der Kernträgerrahmen - wie an sich üblich - weitere Bohrungen (mit oder ohne Gewinde) oder Kanäle zu Montage-, Führungs-, Kühl- oder Versorgungszwecken aufweisen, ohne dass dies die mit dem erfindungsgemäßen Kernträgerrahmen erzielten Vorteile beeinträchtigt.

In Bezug auf die Erfindung ist von besonderer Bedeutung, dass zwei gegenüberliegende Rahmenschenkel zur unmittelbaren Anlage äußerer Bereiche des Kernteils dienen. Das Kernteil weist seitliche Stützabschnitte auf, die im montierten Zustand der Vorrichtung an dem Kernträgerrahmen anliegen. Durch diese Maßnahme lässt sich das Kernteil passgenau stützen, wodurch große Kräfte im Rahmen bzw. durch den Rahmen aufnehmbar sind. Eine ganz erhebliche Stabilität ist somit gewährleistet.

Es ist bevorzugt, wenn das Kernteil im montierten Zustand der Vorrichtung zumindest teilweise formschlüssig in die zentrale Durchiassöffnung des Kernträgerrahmens hineinragt. Dadurch ist ein seitlich sicherer Sitz des Kernteils arm Kernträgerrahmen gewährleistet.

Weiter ist es bevorzugt, dass der Kernträgerrahmen die Grundform eines rechteckigen Rings mit rechteckigem Querschnitt besitzt. Hierdurch kann der Kernträgerrahmen in besonders flexibler Weise mit unterschiedlichen Kernteilen bestückt werden.

Weiterhin ist es bevorzugt, wenn der Kernträgerrahmen an einer Grundplatte montiert ist, die eine Befestigung der Vorrichtung an einer maschinenseitigen Aufspannfläche ermöglicht. Ein modularer Aufbau mit einem Kernträgerrahmen und einer hiervon separaten Grundplatte vereinfacht die Fertigung dieser Bauteile. Für ein Umrüsten des Werkzeugs für unterschiedliche Formteile ist - wie erläutert - lediglich ein Austausch des Kernteils mit Auswerferplatte und des Mantelteils erforderlich. Der flexibel bestückbare Kernträgerrahmen dagegen kann an der Grundplatte dauerhaft befestigt bleiben. Alternativ zu dem erläuterten modularen Aufbau können der Kernträgerrahmen und die Grundplatte auch einstückig ausgebildet sein.

Auch ist es bevorzugt, wenn an der genannten Grundplatte (separat oder integral mit dem Kernträgerrahmen ausgebildet) eine hubbetätigbare Adapterplatte gelagert ist, die mit der Auswerferplatte fest verbunden werden kann, um die Auswerferplatte zu den Auswurfbewegungen anzutreiben. Diese Adapterplatte trägt somit ebenfalls dazu bei, das Werkzeug in flexibler Weise zur Herstellung unterschiedlicher Formteile anpassen zu können. Bei der Montage eines einem bestimmten Formteil entsprechenden Kernteils ist es also lediglich erforderlich, die mit dem Kernteil als Baueinheit verbundene Auswerferplatte durch den Durchgang des Kernträgerrahmens zu führen und mit der Adapterplatte dauerhaft zu verbinden.
Es gibt nun verschiedene Möglichkeiten, die Lehre der vorliegenden Erfindung in vorteilhafter Weise auszugestalten und weiterzubilden. Dazu ist einerseits auf die den nebengeordneten Patentansprüchen 1 und 21 nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigt
- Fig. 1: in einer schematischen Ansicht einen Kernträgerrahmen,
- Fig. 1a: in einer schematischen, auf das Wesentliche reduzierten Ansicht den Gegenstand aus Fig. 1.
- Fig. 2: in einer schematischen Ansicht eine Grundplatte,
- Fig. 2a: in einer schematischen, auf das Wesentliche reduzierten Ansicht den Gegenstand aus Fig. 2,
- Fig. 3: in einer schematischen Ansicht den Kernträgerrahmen gemäß Fig. 1, montiert an der Grundplatte gemäß Fig. 2,
- Fig. 4: in einer schematischen Ansicht ein Kernteil mit Auswerferplatte, montiert im Kernträgerrahmen,
- Fig. 5: in einer schematischen Ansicht das im Kernträgerrahmen montierte Kernteil mit der Auswurfplatte, angeordnet auf der Grundplatte mit dazwischen vorgesehener Adapterplatte,
- Fig. 5a: in eine schematischen, auf das Wesentliche reduzierten Ansicht den Gegenstand aus Fig. 5,
- Fig. 6: in einer schematischen Ansicht das Kernteil im nicht eingebauten Zustand,
- Fig. 7: in einer schematischen Ansicht die Auswerferplatte auf einer Auswerferadapterplatte,
- Fig. 8: in einer schematischen Ansicht ein montiertes Mantelteil in einem Träger,
- Fig. 8a: in einer schematischen, auf das Wesentliche reduzierten Ansicht den Gegenstand aus Fig. 8,
- Fig. 9: in einer schematischen Ansicht das Mantelteil im nicht eingebauten Zustand,
- Fig. 10: in einer schematischen Ansicht den Mantelteilträger in isolierter Form,
- Fig. 11: in einer schematischen Ansicht eine Aufspannplatte zum Aufspannen des Manfelteüträgers in isolierter Form,
- Fig. 12: in einem schematischen Längsschnitt die wesentlichen Teile der gesamten Vorrichtung und
- Fig. 13: in einem schematischen Querschnitt die wesentlichen Teile der gesamten Vorrichtung.

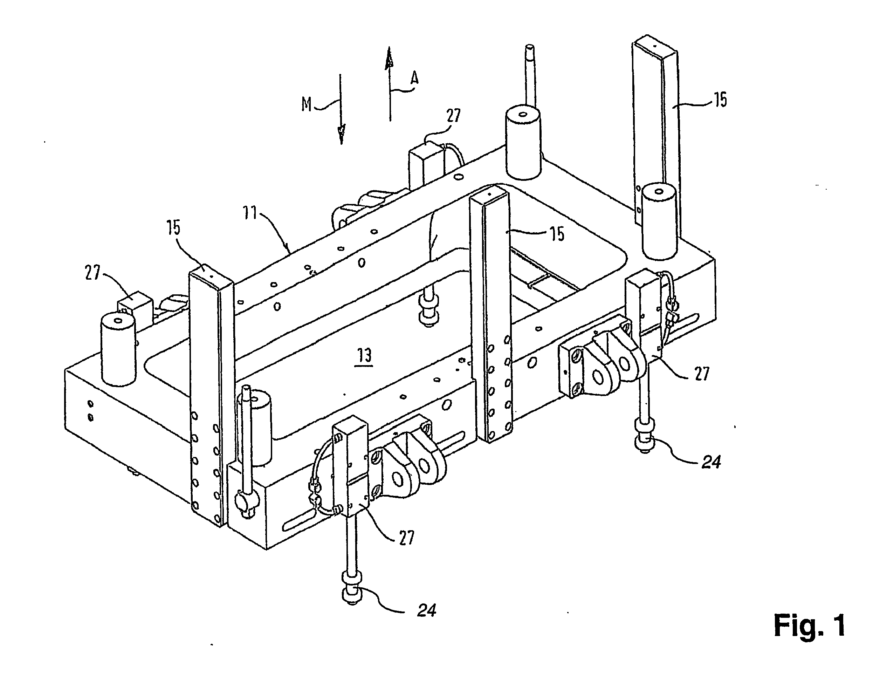

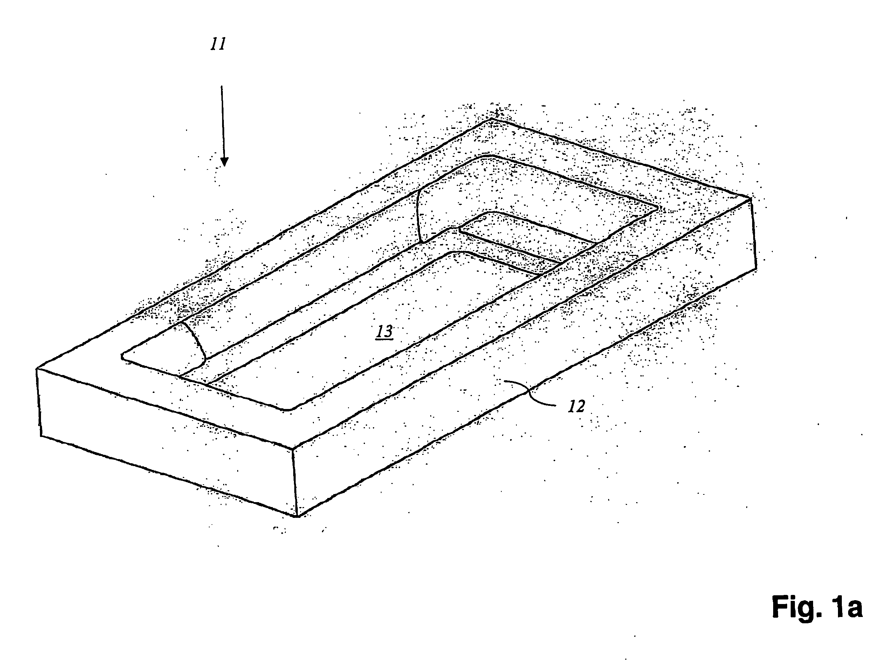

Fig. 1 zeigt einen Kernträgerrahmen 11, der Teil eines Spritzgießwerkzeugs ist und zur Aufnahme eines Kernteils 31 dient. Der Kernträgerrahmen 11 hat im Wesentlichen die Form eines rechteckigen Rahmens mit rechteckigem Querschnitt, der einen im Wesentlichen rechteckigen zentralen Durchgang 13 bildet. Der Kernträgerrahmen 11 besitzt verschiedene Transport-, Führungs- und Befestigungseinrichtungen, die im Zusammenhang mit herkömmlichen Kernträgern an sich bekannt sind. Beispielsweise sind nach oben wegragende Führungstaschen 15 vorgesehen, die zur Führung des nachfolgend noch erörterten Mantelteils dienen.

Fig. 1 zeigt des Weiteren, dass am Kernträgerrahmen 11 insgesamt vier Hubeinrichtungen 27 angeordnet sind, die zum Anheben und Senken einer in Fig. 1 nicht gezeigten hubbetätigbaren Adapterplatte 25 dienen.

Fig. 1a zeigt den Gegenstand aus Fig. 1 auf das Wesentliche reduziert. So zeigt Fig. 1a den als Kernträgerrahmen 11 ausgebildeten Kernträger, der zur Aufnahme des Kernteils 31 nebst Auswerfereinrichtung dient. Fig. 1a zeigt deutlich, dass der Kernträger rahmenartig ausgebildet ist und einen zentralen Durchgang 13 hat. Die Schenkel 12 des Kernträgerrahmens 11 haben einen rechtwinkligen Querschnitt.

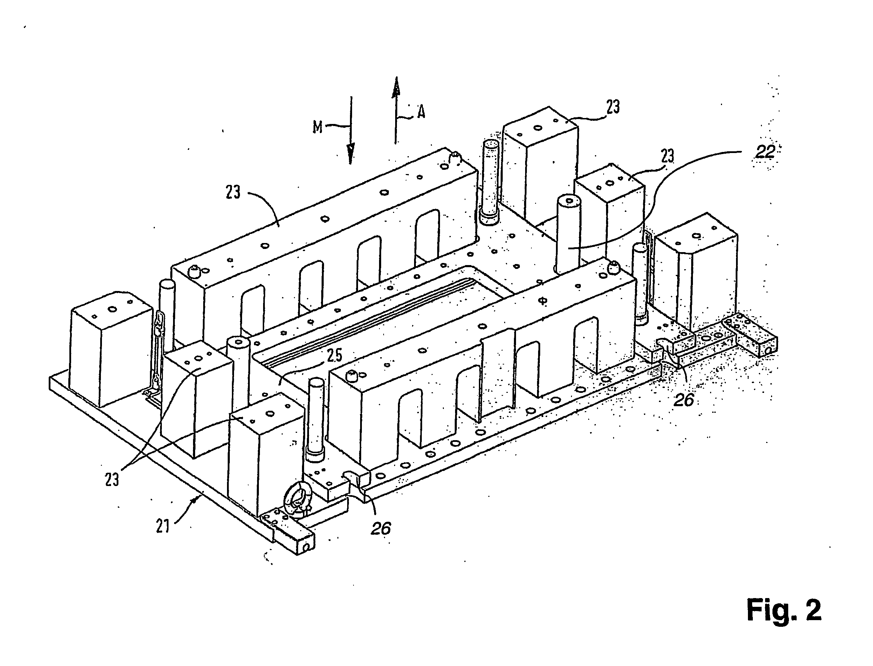

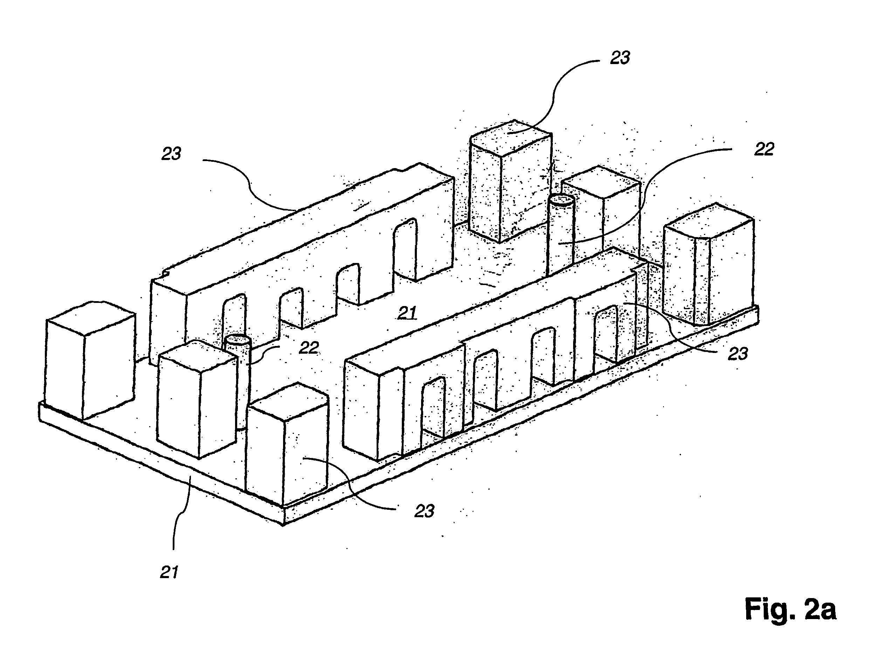

Fig. 2 zeigt eine meist auch als Aufspannplatte bezeichnete Grundplatte 21 mit mehreren nach oben abragenden Auflageerhöhungen 23, wobei die Auflageerhöhrungen 23 zur Beabstandung und Auflage des Kernträgerrahmens 11 dienen. Auf der Grundplatte 12 ist eine vertikal bewegliche Adapterplatte 25 eingesetzt, die zur vertikalen Beweglichkeit geführt ist. Zur vertikalen Bewegung der Adapterplatte 25 dienen die in Fig. 1 gezeigten Hubeinrichtungen 27, die in die in der Adapterplatte 25 ausgebildete Aufnahmen 26 greifen, und zwar mit besonderen Eingriffselementen 24.

Fig. 2a zeigt in einer schematischen Ansicht den Gegenstand aus Fig. 2, jedoch auf das Wesentliche reduziert. So zeigt Fig. 2a die Grundplatte 21 ohne die Adapterplatte 25, jedoch mit den Auflageerhöhungen 23, die als orthogonal abragende Distanzkörper ausgebildet sind. Des Weiteren zeigt Fig. 2a Führungsstifte 22, die zur Führung der in Fig. 2a nicht gezeigten Adapterplatte 25 dienen.

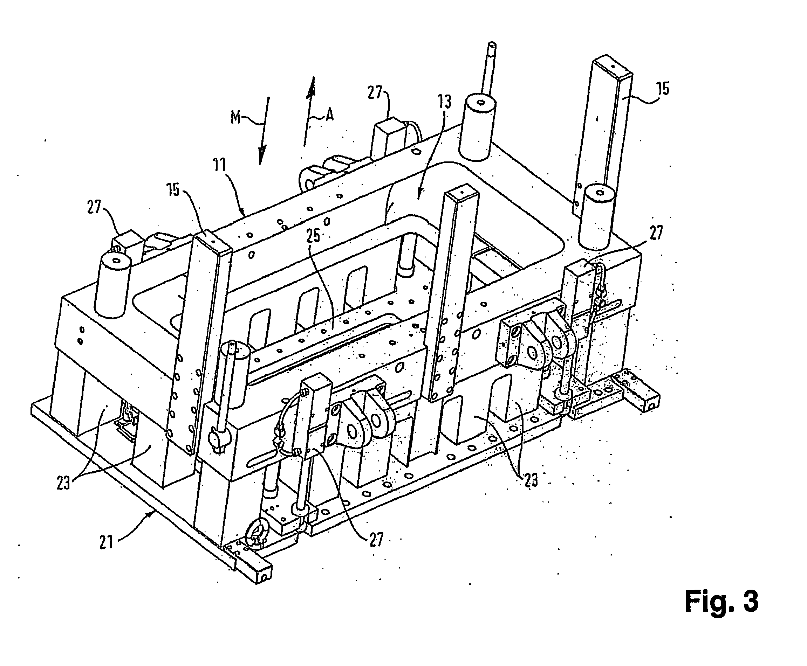

Im montierten Zustand des Werkzeugs ist der in den Fig. 1 und 1a gezeigte Kernträgerrahmen 11 an der Oberseite der Auflageerhöhungen 23 der in Fig. 2 gezeigten Grundplatte 21 dauerhaft befestigt. Dieser Zustand ist in Fig. 3 gezeigt. Aus Fig. 3 sind insbesondere auch die vier an der Außenseite des Kernträgerrahmens 11 montierten Hubeinrichtungen 27 erkennbar, mittels derer die Adapterplatte 25 entlang einer vertikal nach oben gerichteten Auswurfrichtung A hubbetätigt werden kann.

Fig. 3 zeigt des Weiteren deutlich, dass der Kernträgerrahmen 11 auf den Auflageerhöhungen 23 bzw. auf den die Auflageerhöhung 23 bildenden Distanzkörpern aufsitzt bzw. anliegt, wobei der den Hub der Auswerfereinrichtung bewerkstelligende Mechanismus zwischen der Grundplatte 21 und dem Kernträgerrahmen 11 wirkt.

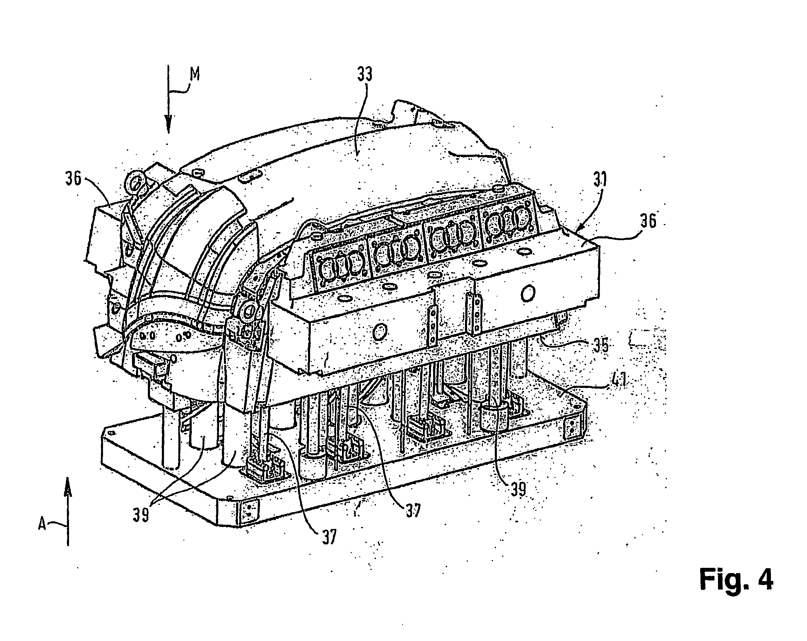

Fig. 4 zeigt ein Kernteil 31 mit einer Form gebenden Kernseite (Oberseite) 33 und einer im Wesentlichen ebenen Unterseite 35. In der Umgebung der Form gebenden Kernseite 33 besitzt das Kernteil 31 seitlich abstehende Stützabschnitte 36, die zur Auflage bzw. Anlage auf den Kernträgerrahmen 11 dienen. Das Kernteil 31 ist an der Unterseite 35 über mehrere Betätigungsstangen 37 und Führungssäulen 39 mit einer im Wesentlichen rechteckigen Auswerferplatte 41 verbunden.

In der Darstellung gemäß Fig. 4 befindet sich die Auswerferplatte 41 in einer Betriebsstellung, in der Auswerfereinsätze formschlüssig in die Form gebende Kernseite 33 des Kernteils 31 integriert sind. Ausgehend von dieser Betriebsstellung kann die Auswerferplatte 41 retativ zu dem Kernteil 31 entlang der Auswurfrichtung A in eine Auswurfstellung verfahren werden, wobei die Auswerferplatte 41 von den Führungssäulen 39 geführt wird. Aufgrund einer derartigen Auswurfbewegung werden die genannten Auswerfereinsätze mittels der Betätigungsstangen 37 aus dem Kernteil 31 nach oben ausgefahren und/oder seitlich bewegt, um ein erzeugtes Formteil zu entformen.

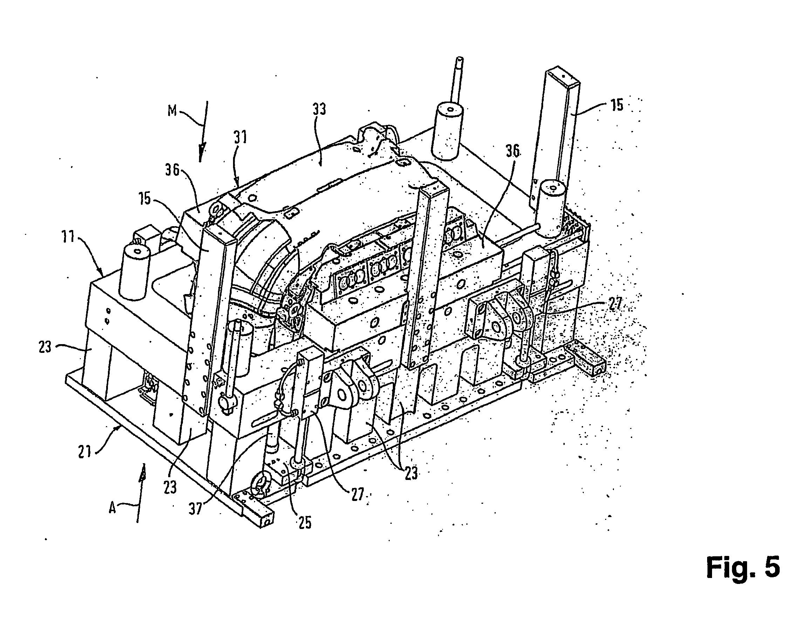

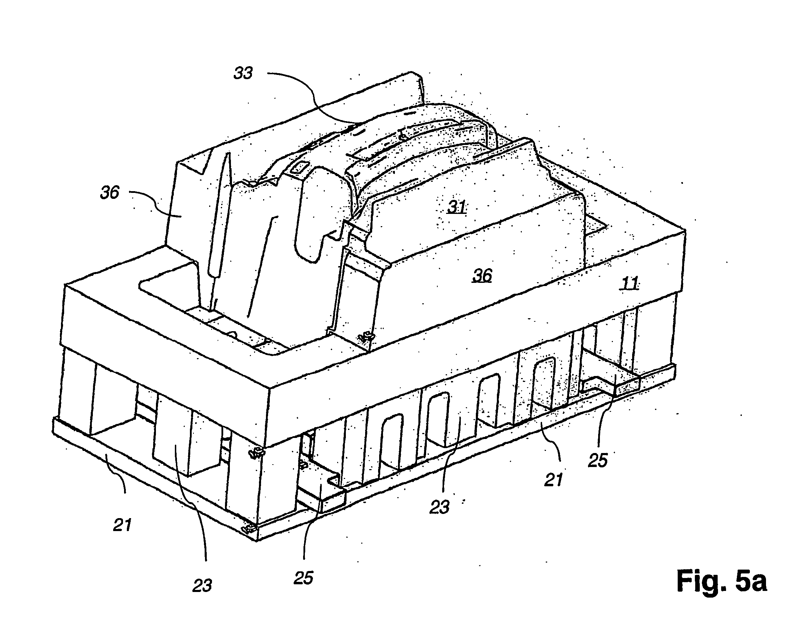

Fig. 5 zeigt einen kompletten Kernaufbau mit der Grundplatte 21 und mit an deren Oberseite befestigtem Kernträgerrahmen 11. In den Kernträgerrahmen 11 ist das Kernteil 31 eingesetzt. Die mit dem Kernteil 31 unterseitig verbundene Auswerferplatte 41 ragt in die Grundplatte 21 hinein, und zwar in den Zwischenraum zwischen den Auflageerhöhungen 23.

Fig. 5a zeigt den Gegenstand aus Fig. 5, jedoch auf die wesentlichen baulichen Merkmale reduziert. So zeigt Fig. 5a das Kernteil 31, welches mit seinen Stützabschnitten 36 auf den Kernträgerrahmen 11 aufsitzt bzw. dort anliegt. Darüber hinaus greift das Kernteil 31 mehr oder weniger formschlüssig in den Kernträgerrahmen 11 hinein.

Fig. 5a zeigt des Weiteren, dass der Kernträgerrahmen 11 auf den Auflageerhöhungen 23 zur Anlage kommt, wobei die Auflageerhöhungen 23 von der Grundplatte 21 orthogonal abragen. Dazwischen ist die Adapterplatte 25 angedeutet, auf der die Auswerferplatte 41 zur Anlage kommt.

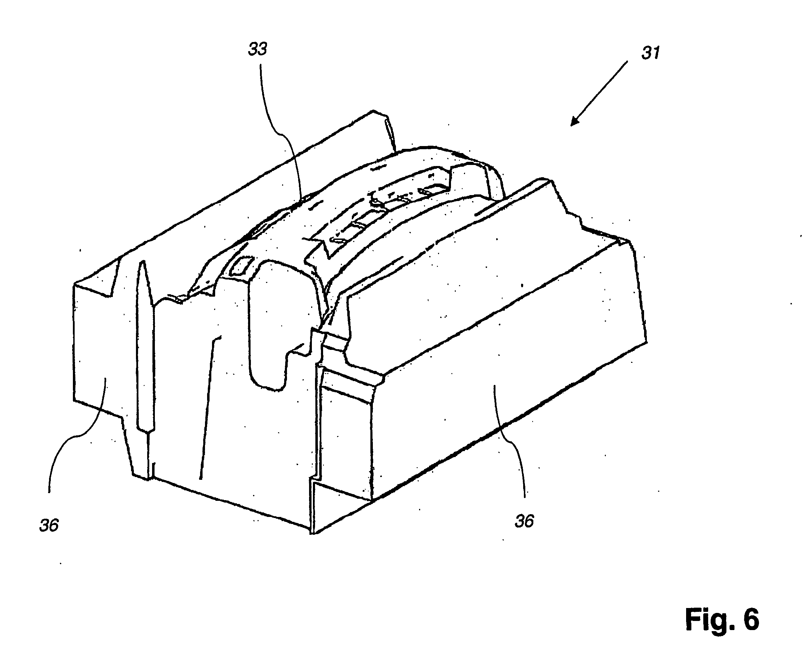

Fig. 6 zeigt in einer schematischen Ansicht das Kernteil 31 im nicht eingebauten Zustand, wobei das Kernteil 31 die zur Auf- bzw. Anlage an den Kernträgerrahmen 11 dienenden Stützabschnitte 36 als integrale Bestandteile hat.

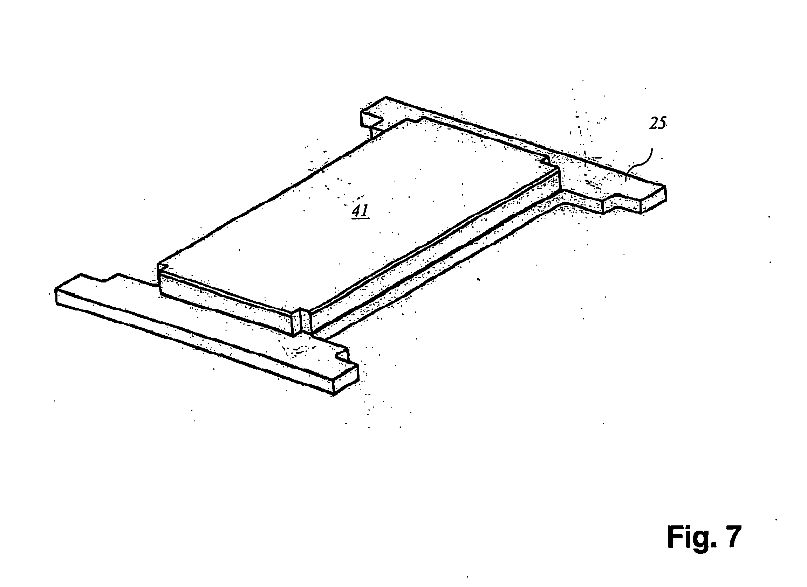

Fig. 7 zeigt in einer schematischen Ansicht die Adapterplatte 25, die gemäß der Darstellung in den Fig. 5 und 5a zwischen der Grundplatte 21 und dem Kernträgerrahmen 11 hubbewegbar angeordnet ist. Darauf kommt die Auswerferplatte 41 zur Anlage, so dass mit einer Hubbewegung der Adapterplatte 25 die Auswerferplatte 41 und somit die Betätigungsstangen 37 und die Führungssäulen 39 gegen das Kernteil 31 bewegbar sind, um nämlich den Ausstoßvorgang durchzuführen.

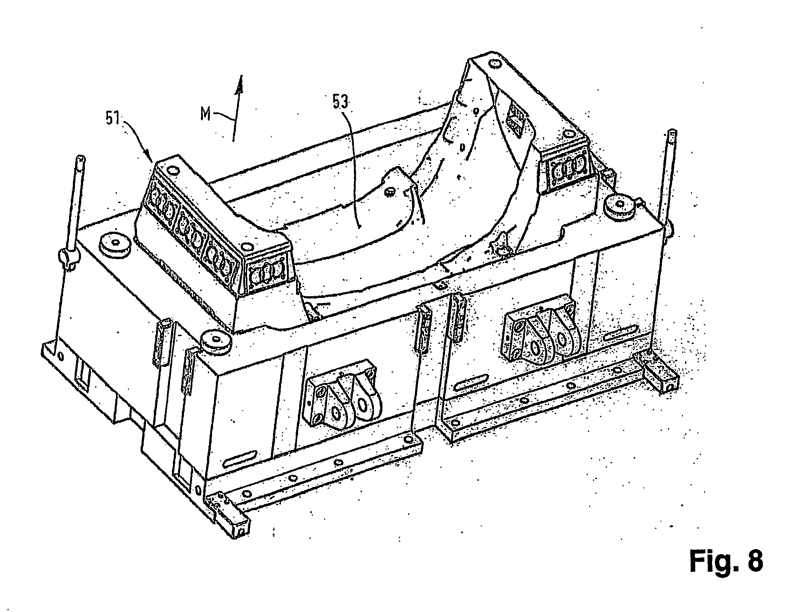

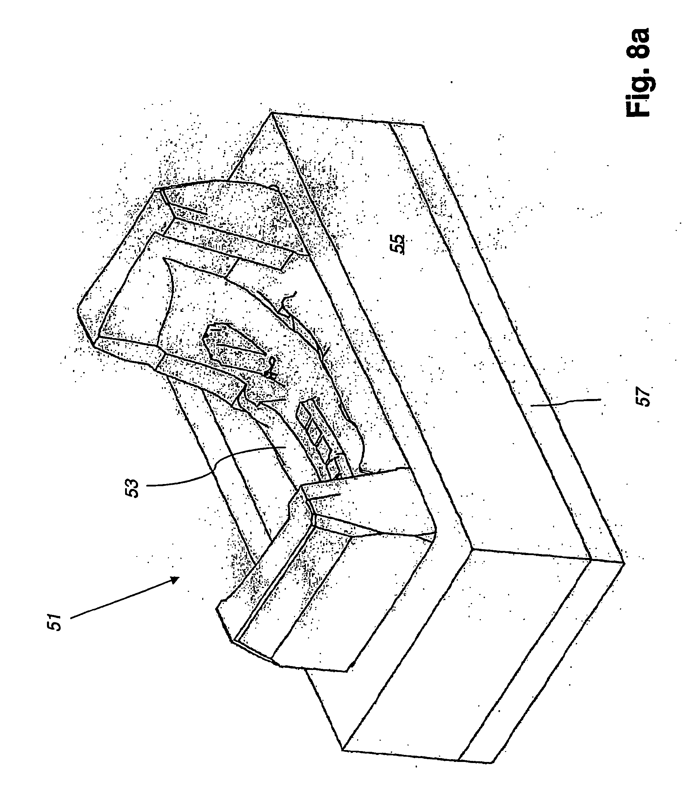

Fig. 8 zeigt, der besseren Erkennbarkeit halber auf dem Kopf stehend, ein dem Kernteil 31 zugeordnete Mantelteil 51, welches üblicherweise auch als Matrize bezeichnet wird. Dieses besitzt an seiner Unterseite (Oberseite in der Darstellung gemäß Fig. 8) eine Form gebende Mantelseite 53.

Der Kernträgerrahmen 11, die Grundplatte 21 mit der Adapterplatte 25, das Kernteil 31 mit der Auswerferplatte 41 und das Mantelteil 51 bilden eine Vorrichtung zum Herstellen von Spritzguss-Formtellen, nämlich von Kunststoff-Stoßfängern für Kraftfahrzeuge. Im montierten Zustand begrenzen die Form gebende Kernseite 33 des Kernteils 31 und die Form gebende Mantelseite 53 des Mantelteils 51 einen dem herzustellenden Stoßfänger entsprechenden Hohlraum, in den zumindest eine Hochdruckzuführung für das Spritzgussmaterial mündet (in den Figuren nicht gezeigt). Der Kernaufbau gemäß Fig. 5 und das Mantelteil 51 gemäß Fig. 8 sind zu diesem Zweck zwischen einer maschinenseitigen Aufspannfläche und einer Druck ausübenden Anordnung gegenseitig verspannbar.

Fig. 8a zeigt die Anordnung aus Fig. 8, jedoch auf die wesentlichen Bestandteile reduziert. So lässt Fig. 8a das Mantelteil 51 mit der Form gebenden Mantelseite 53 erkennen. Das Mantelteil 51 ist in einem Matrizenträger 55 angeordnet, an einer Aufspannplatte 57 auf- bzw. anliegend.

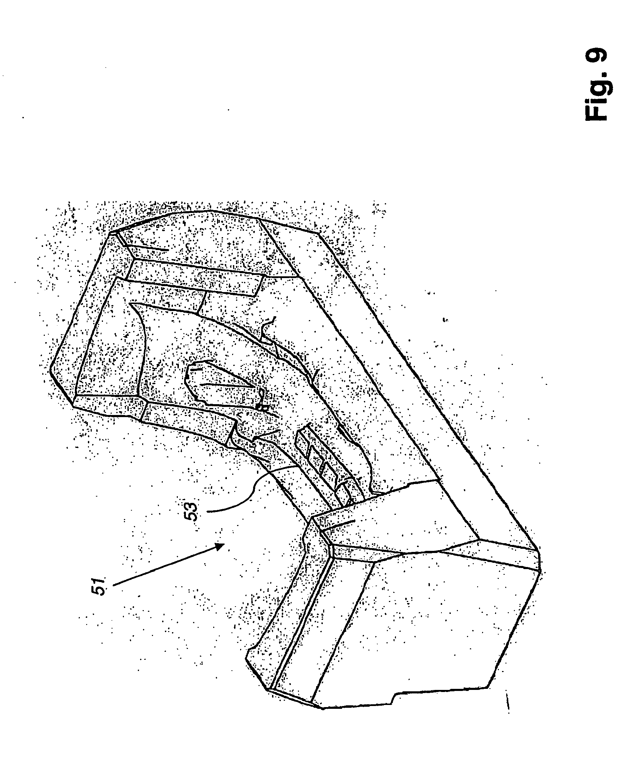

Fig. 9 zeigt in einer schematischen Ansicht das Mantelteil 51 im nicht eingebauten Zustand, wobei die Form gebende Mantelseite 53 angedeutet ist.

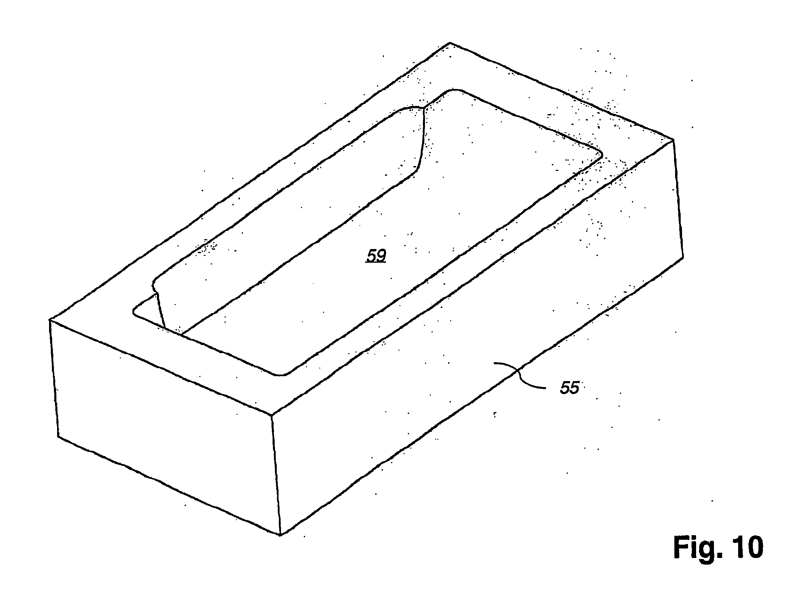

Fig. 10 zeigt für sich gesehen den Matrizenträger 55 im unbeladenen Zustand. Die dort erkennbare Ausnehmung 59 dient zur Aufnahme des Mantelteils 51.

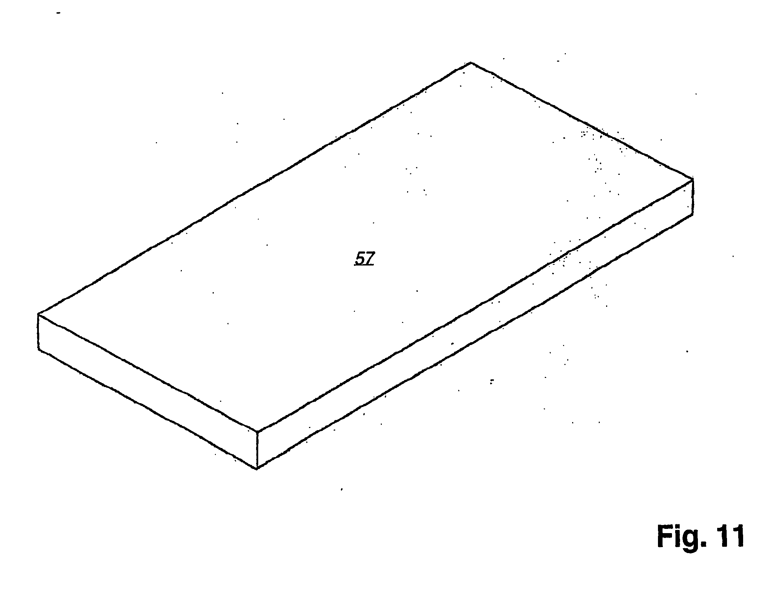

Fig. 11 zeigt für sich gesehen die Aufspannplatte für den Matrizenträger 55.

Die Besonderheit der in den Figuren gezeigten Vorrichtung besteht in der Ausgestaltung des Kernträgerrahmens 11 mit dem zentralen Durchgang 13 und in der hierdurch bedingten besonders einfachen Montage und Demontage des Kernteils 31 an bzw. von dem Kernträgerrahmen 11. Der in den Fig. 5 und 5a gezeigte Kernaufbau kann nämlich auf folgende einfache Weise montiert oder gewechselt werden:
Der Kernträgerrahmen 11 wird - wie in Fig. 3 gezeigt - dauerhaft an der Oberseite der Auflageerhöhungen 23 der Grundplatte 21 befestigt, wobei die zwischen den Auflageerhöhungen 23 befindliche Adapterplatte 25 von den Hubeinrichtungen 27 des Kernträgerrahmens 11 hubbetätigbar gehalten ist. Die Grundplatte 21 mit der Adapterplatte 25 und der Kernträgerrahmen 11 sind für unterschiedliche Formteile universell einsetzbar.

Das Kernteil 31 und die Auswerferplatte 41 sind speziell für ein bestimmtes zu erzeugendes Formteil ausgebildet. Das Kernteil 31 und die Auswerferplatte 41 mit den zugeordneten Betätigungsstangen 37 und Führungssäulen 39 werden als eine gemeinsame Baueinheit vormontiert, wie in Fig. 4 gezeigt.

Die vormontierte Baueinheit aus Kernteil 31 und Auswerferplatte 41 gemäß Fig. 4 wird von oben entlang einer vertikal nach unten gerichteten Montagerichtung M in die Einheit aus Grundplatte 21 und hieran befestigtem Kernträgerrahmen 11 gemäß Fig. 3 eingesetzt. Dabei wird zunächst die in Montagerichtung M gerichtete Auswerferplatte 41 in den zentralen Durchgang 13 des Kernträgerrahmens 11 eingeführt. Während das Kernteil 31 weiter entlang der Montagerichtung M bewegt wird, durchdringt die Auswerferplatte 41 den zentralen Durchgang 13 des Kernträgerrahmens 11. Schließlich liegt, wie in Fig. 5 gezeigt, das Kernteil 31 mit den seitlichen Stützabschnitten 36 auf dem Kernträgerrahmen 11 auf, wobei die Unterseite 35 des Kernteils 31 in den zentralen Durchgang 13 des Kernträgerrahmens 11 hineinragt. Die in Betriebsstellung befindliche Auswerferplatte 41 liegt dabei auf der Adapterplatte 25 auf.

Das Kernteil 31 wird nun an dem Kernträgerrahmen 11 fixiert, beispielsweise mittels Schraubverbindungen. Ebenso werden die Auswerferplatte 41 und die Adapterplatte 25 miteinander verbunden.

Das Demontieren des Kernteils 31 vom Kernträgerrahmen 11 erfolgt in umgekehrter Reihenfolge. Zunächst werden also die Verbindungen zwischen dem Kernteil 31 und dem Kernträgerrahmen 11 sowie zwischen der Auswerferplatte 41 und der Adapterplatte 25 gelöst. Danach kann die Baueinheit aus Kernteil 31 und hiermit verbundener Auswerferplatte 41 entgegen der Montagerichtung M aus dem Kernträgerrahmen 11 entnommen werden, wobei die Auswerterplatte 41 wiederum den zentralen Durchgang 13 des Kernträgerrahmens 11 passiert.

Die Montage und Demontage des Kernteils 31 mit Auswerferplatte 41 an bzw. von dem Kernträgerrahmen 11 ist also mit reduziertem Arbeits- und Zeitaufwand möglich. Insbesondere entfällt ein Zerlegen der Baueinheit aus Kernteil 31 und Auswerferplatte 41. Somit ist ein schnelles und einfaches Umkonfigurieren des Werkzeugs zur Herstellung unterschiedlicher Formteile mit jeweils zugeordnetem Kernteil 31 und zugeordneter Auswerferplatte 41 möglich.

Zu dem Mantelteil 51 ist noch anzumerken, dass dieses üblicherweise einen im Vergleich zum Kernteil 31 einfacheren Aufbau ohne verfahrbare Auswerferplatte hat. Allerdings ist es möglich, dass auch für das Mantelteil 51 ein Mantelträgerrahmen mit einem zentralen Durchgang zur Aufnahme einer Auswerferplatte - ähnlich dem Kernträgerrahmen 11 - vorgesehen ist.

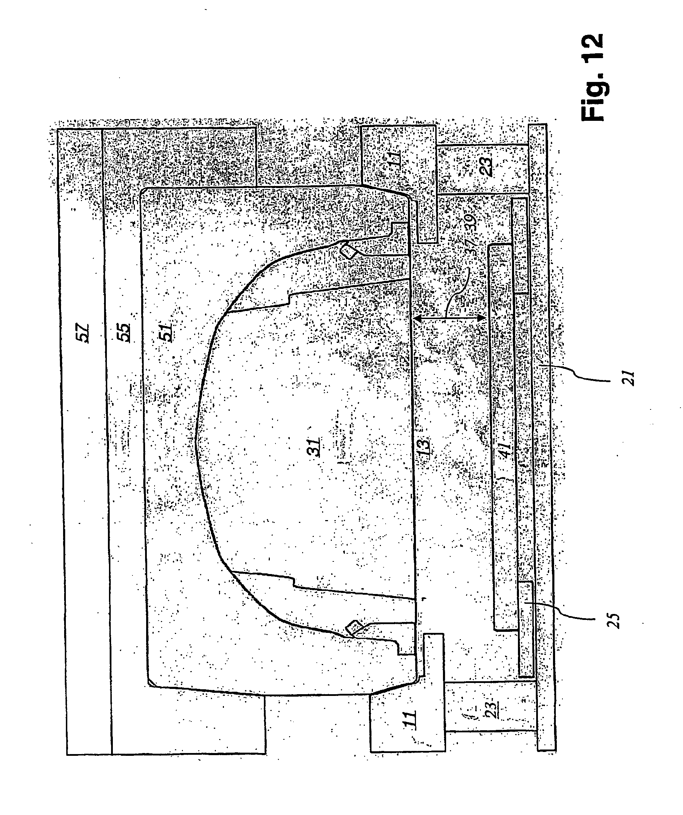

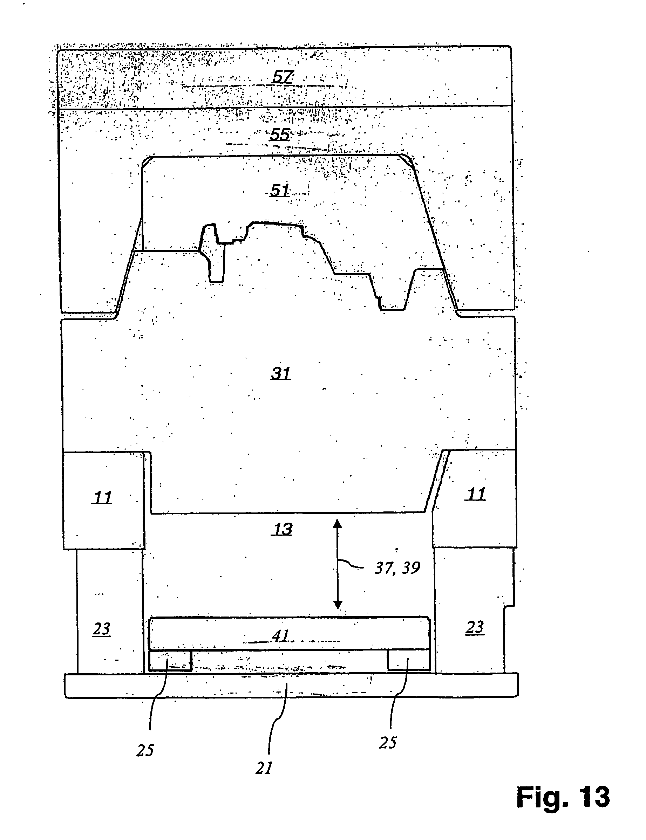

Die Fig. 12 und 13 zeigen in schematischen Schnittdarstellungen - Längsschnitt und Querschnitt - die wesentlichen Teile der zuvor bereits beschriebenen Vorrichtung, so dass unter Bezugnahme auf die Bezugszeichen und die voranstehenden Erläuterungen auf weiterreichende Ausführungen verzichten werden kann.

Es sei angemerkt, dass die Erfindung und die hiermit verbundenen Vorteile auch auf eine Vorrichtung zum Herstellen von Druckguss-Formteilen oder pressgeformten Teilen anwendbar sind.

Schließlich sei darauf hingewiesen, dass das voranstehend beschriebene Ausführungsbeispiel zur Erörterung der beanspruchten Lehre dient, diese jedoch nicht auf das Ausführungsbeispiel einschränkt.

## Patentansprüche

1. Vorrichtung zum Herstellen von Formteilen, insbesondere von Spritzguss-, Druckguss- oder Press-Formtellen, mit einem Kernteil (31), einer dem Kernteil (31) zugeordneten Auswerfereinrichtung, einem das Kernteil (31) und die Auswerterelnrichtung (41) tragenden Kernträger (11) und einer Matrize (51), wobei das Kernteil (31) und die Matrize (51) gegeneinander vorspannbar sind und dabei zwischen sich einen dem Formteil entsprechenden Hohlraum bilden, wobei der Kernträger als Kernträgerrahmen (11) mit einem Durchgang (13) ausgebildet ist, und dass das Kernteil (31) und die Auswerfereinrichtung (41) eine Baueinheit bilden, die von einer Seite aus an dem Kernträgerrahmen (11) einsteckbar ist und dass sich im eingesteckten Zustand die Auswerfereinrichtung (41) durch den Durchgang (13) hindurch erstreckt,
**dadurch gekennzeichnet, dass** zumindest zwei gegenüberliegende Rahmenschenkel (12) zur unmittelbaren Anlage äußerer Bereiche des Kernteils (31) dienen und dass das Kernteil (31) seitliche Stützabschnitte (36) aufweist, die im montierten Zustand der Vorrichtung an dem Kernträgerrahmen (11) anliegen.

2. Vorrichtung nach Anspruch 1, **dadurch gekennzeichnet, dass** sich im eingesteckten Zustand das Kernteil (31) zumindest teilweise in den Durchgang (13) des Kernträgerrahmens (11) hinein erstreckt, wobei
der Durchgang (13) vorzugsweise mittig im Kernträgerrahmen (11) ausgebildet und/oder
in etwa rechtwinketig ausgeführt ist.

3. Vorrichtung nach Anspruch 1 oder 2, **dadurch gekennzeichnet, dass** der Kernträgerrahmen (11) im Wesentlichen symmetrisch ausgebildet ist.

4. Vorrichtung nach einem der Ansprüche 1 bis 3, **dadurch gekennzeichnet, dass** die Rahmenschenkel (12) des Kernträgerrahmens (11) einen im Wesentlichen rechtwinkeligen Querschnitt haben.

5. Vorrichtung nach einem der Ansprüche 1 bis 4, **dadurch gekennzeichnet, dass** die Auswerfereinrichtung eine mit dem Kernteil (31) verbundene Auswerferplatte (41) aufweist, die zum Auswerfen des hergestellten Formteils relativ zu dem Kernteil (31) verfahrbar ist.

6. Vorrichtung nach Anspruch 5, **dadurch gekennzeichnet, dass** die Auswerferplatte (41) mit dem Kernteil (31) über Betätlgungsstangen (37) und/oder Führungsorgane (39) verbunden ist, und dass der Kernträgerrahmen (11) die Betätigungsstangen (37) und/oder Führungsorgane (39) umgibt, so dass sich diese frei durch den Durchgang (13) hindurch erstrecken und/oder
dass die Baueinheit aus Kernteil (31) und Auswerferplatte (41) mit der Auswerferplatte (41) In den Kernträgerrahmen (11) hinein- und durch diesen hindurchragend an dem Kernträgerrahmen (11) montierbar ist.

7. Vorrichtung nach einem der Ansprüche 1 bis 6, **dadurch gekennzeichnet, dass** im montierten Zustand der Vorrichtung das Kernteil (31) zumindest teilweise formschlüssig in den Durchgang (13) des Kernträgerrahmens (11) hineinragt.

8. Vorrichtung nach einem der Ansprüche 1 bis 7, **dadurch gekennzeichnet, dass** der Kernträgerrahmen (11) auf einer Grundplatte (21) montiert ist, wobei
der Kernträgerrahmen (11) auf einer Auflagenerhöhung (23) der Grundplatte (21) mit Abstand zu dieser sitzen kann.

9. Vorrichtung nach Anspruch 8, **dadurch gekennzeichnet, dass** die Auflagenerhöhung (23) entlang dem Umfang, vorzugsweise im Randbereich der Grundplatte (21), orthogonal von der Grundplatte (21) abragende Distanzkörper aufweist.

10. Vorrichtung nach Anspruch 8, **dadurch gekennzeichnet, dass** zwischen der Grundplatte (21) und dem Kernträgerrahmen (11) eine hubbetätigbare Adapterplatte (25) gelagert bzw. geführt ist, die im montierten Zustand mit der Auswerferplatte (41) wirkverbunden ist, wobei
die Adapterplatte (25) im Wesentlichen über die Höhe der AuElagenerhöhung gegen den Kernträgerrahmen (11) bewegbar sein kann und/oder wobei die Bewegung der Adapterplatte (25) über zwischen der Adapterplatte (25) und dem Kernträgerrahmen (11) wirkende Hubeinrichtungen (27) erfolgen kann und wobei
die Hubeinrichtungen (27) vorzugsweise außen an dem Kemträgerrahmen (11) angeordnet sind.

11. Vorrichtung nach Anspruch 10, **dadurch gekennzeichnet, dass** insgesamt vier Hubeinrichtungen (27) vorzugsweise an den Längsseiten des Kernträgerrahmens (11) angeordnet sind.

## Claims

1. An apparatus for the production of moulded parts, especially moulded parts formed by injection-mculding, diecasting or compression-moulding, having a core part (31), an ejector device associated with the core part (31), a core carrier (11) supporting the core part (31) and the ejector device (41), and a female mould (51), the core part (31) and the female mould (51) being tightenable to each other to form between them a cavity corresponding to the moulded part, the core carrier being in the form of a core carrier frame (11) with a passage (13), and the core part (31) and the ejector device (41) forming a structural unit which can be inserted at the core carrier frame (11) from one side and the ejector device (41) extending, in the inserted state, through the passage (13), **characterised in that** at least two opposing frame limbs (12) serve to directly support exterior regions of the core part (31), and the core part (31) has lateral support portions (36) which, in the assembled state of the apparatus, rest on the core carrier frame (11).

2. An apparatus according to claim 1, **characterised in that** in the inserted state the core part (31) extends at least partially into the passage (13) of the core carrier frame (11), wherein
the passage (13) is formed preferably centrally in the core carrier frame (11) and/or is approximately rectangular.

3. An apparatus according to claim 1 or 2, **characterised in that** the core carrier frame (11) is constructed to be substantially symmetrical.

4. An apparatus according to any one of claims 1 to 3, **characterised in that** the frame limbs (12) of the core carrier frame (11) are of a substantially rectangular cross-section.

5. An apparatus according to any one of claims 1 to 4, **characterised in that** the ejector device has an ejector plate (41) which is connected to the core part (31) and which is movable relative to the core part (31) for ejection of the moulded part produced.

6. An apparatus according to claim 5, **characterised in that** the ejector plate (41) is connected to the core part (31) via actuating rods (37) and/or guide elements (39), and that the core carrier frame (11) surrounds the actuating rods (37) and/or guide elements (39), so that they extend freely through the passage (13), and/or
that the structural unit formed by core part (31) and ejector plate (41) can be mounted on the core carrier frame (11) with the ejector plate (41) extending into and through the core carrier frame (11).

7. An apparatus according to any one of claims 1 to 6, **characterised in that**, in the assembled state of the apparatus, the core part (31) extends at least partially in a form-fitting manner into the passage (13) of the core carrier frame (11).

8. An apparatus according to any one of claims 1 to 7, **characterised in that** the core carrier frame (11) is mounted on a base plate (21), wherein
the core carrier frame (11) can be seated on an elevated support (23) of the base plate (21), at a distance from the base plate (21).

9. An apparatus according to claim 8, **characterised in that** the elevated support (23) has, along the perimeter, preferably in the edge region of the base plate (21), spacers which project orthogonally from the base plate (21).

10. An apparatus according to claim 8, **characterised in that** a lift-operable adapter plate (25) which, in the assembled state, is operatively connected to the ejector plate (41) is supported or guided between the base plate (21) and the core carrier frame (11), wherein
the adapter plate (25) may be movable substantially above the height of the elevated support towards the core carrier frame (11) and/or wherein the movement of the adapter plate (25) may be effected by means of lifting devices (27) acting between the adapter plate (25) and the core carrier frame (11) and wherein
the lifting devices (27) are preferably disposed on the outside of the core carrier frame (11).

11. An apparatus according to claim 10, **characterised in that** a total of four lifting devices (27) are preferably disposed on the long sides of the core carrier frame (11)

## Revendications

1. Dispositif pour la réalisation de pièces moulées, en particulier des pièces moulées par injection, par coulée sous pression ou par pression, comportant une partie centrale (31), un dispositif d'éjection, associé à la partie centrale (31), un support (11), portant la partie centrale (31) et le dispositif d'éjection (41), et une empreinte (51), la partie centrale (31) et l'empreinte (51) pouvant être serrées l'une contre l'autre et formant entre elles, à cette occasion, une cavité correspondant à la pièce moulée, le support étant réalisé sous la forme d'un cadre de support (11) avec un passage (13), et la partie centrale (31) et le dispositif d'éjection (41) forment une unité qui peut être insérée à partir d'un côté dans le cadre de support (11), et le dispositif d'éjection (41), dans la position insérée, s'étend à travers le passage (13),
**caractérisé en ce qu'**au moins deux branches (12) face à face du cadre de support sont destinées à recevoir en appui direct des zones extérieures de la partie centrale (31) et **en ce que** la partie centrale (31) comporte des parties d'appui (36) latérales qui, dans la position montée du dispositif, sont en appui contre le cadre de support (11).

2. Dispositif selon la revendication 1, **caractérisé en ce que** la partie centrale (31), dans la position insérée, s'étend au moins en partie à l'intérieur du passage (13) du cadre de support (11), ledit passage (13) étant réalisé de préférence au milieu dans le cadre de support (11) et/ou étant sensiblement rectangulaire.

3. Dispositif selon la revendication 1 ou 2, **caractérisé en ce que** le cadre de support (11) est réalisé sensiblement symétriquement.

4. Dispositif selon l'une quelconque des revendications 1 à 3, **caractérisé en ce que** les branches (12) du cadre de support (11) ont une section sensiblement rectangulaire.

5. Dispositif selon l'une quelconque des revendications 1 à 4, **caractérisé en ce que** le dispositif d'éjection comporte une plaque d'éjection (41), qui est assemblée à la partie centrale (31) et qui, pour l'éjection de la pièce moulée, est apte à être déplacée par rapport à la partie centrale (31).

6. Dispositif selon la revendication 5, **caractérisé en ce que** la plaque d'éjection (41) est reliée à la partie centrale (31) par des tiges de manoeuvre (37) et/ou des organes de guidage (39), et **en ce que** le cadre de support (11) entoure les tiges de manoeuvre (37) et/ou les organes de guidage (39), de telle sorte que ceux-ci s'étendent librement à travers le passage (13), et/ou **en ce que** l'unité, formée par la partie centrale (31) et la plaque d'éjection (41), peut être montée avec la plaque d'éjection (41) à l'intérieur du cadre de support (11) et, en traversant celui-ci, contre le cadre de support (11).

7. Dispositif selon l'une quelconque des revendications 1 à 6, **caractérisé en ce que**, dans la position montée du dispositif, la partie centrale (31) s'engage au moins en partie par conjugaison de forme dans le passage (13) du cadre de support (11).

8. Dispositif selon l'une quelconque des revendications 1 à 7, **caractérisé en ce que** le cadre de support (11) est monté sur une plaque de base (21), le cadre de support (11) pouvant reposer sur un exhaussement d'appui (23) de la plaque de base (21), à distance de celle-ci,

9. Dispositif selon la revendication 8, **caractérisé en ce que** l'exhaussement d'appui (23) comporte le long de la périphérie, de préférence dans la zone de bordure de la plaque de base (21), des corps d'écartement qui s'avancent en saillie orthogonalement à partir de la plaque de base (21).

10. Dispositif selon la revendication 8, **caractérisé en ce qu'**entre la plaque de base (21) et le cadre de support (11) est montée ou guidée une plaque d'adaptation (25) qui est apte à être relevée et qui, dans la position montée, est en liaison active avec la plaque d'éjection (41), la plaque d'adaptation (25) pouvant être déplacée sensiblement au-delà de la hauteur de l'exhaussement d'appui contre le cadre de support (11) et/ou le mouvement de la plaque d'adaptation (25) pouvant être actionné par des dispositifs de levage (27), agissant entre la plaque d'adaptation (25) et le cadre de support (11), et les dispositifs de levage (27) étant disposés, de préférence, à l'extérieur contre le cadre de support (11).

11. Dispositif selon la revendication 10, **caractérisé en ce qu'**au total quatre dispositifs de levage (27) sont disposés, de préférence, sur les côtés longitudinaux du cadre de support (11).
